(19)

**Europäisches Patentamt**
**European Patent Office**
**Office européen des brevets**

(11) **EP 3 892 847 B1**

(12) **EUROPEAN PATENT SPECIFICATION**

(45) Date of publication and mention
of the grant of the patent:
**31.01.2024 Bulletin 2024/05**

(21) Application number: **21166845.4**

(22) Date of filing: **02.04.2021**

(51) International Patent Classification (IPC):
**F02M 61/18** $^{(2006.01)}$ **F02B 23/10** $^{(2006.01)}$

(52) Cooperative Patent Classification (CPC):
**F02M 61/1813; F02B 23/104; F02M 61/1833;**
**F02M 61/184;** Y02T 10/12

(54) **FUEL INJECTOR**

KRAFTSTOFFEINSPRITZER

INJECTEUR DE CARBURANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **06.04.2020 GB 202005051**

(43) Date of publication of application:
**13.10.2021 Bulletin 2021/41**

(73) Proprietor: **Delphi Automotive Systems**
**Luxembourg SA**
**4940 Bascharage (LU)**

(72) Inventors:
 • **SHI, Junmei**
  **54296 Trier (DE)**
 • **HOFFMANN, Guy**
  **F-5240 Sandweiler (LU)**

(74) Representative: **Office Freylinger**
**P.O. Box 48**
**8001 Strassen (LU)**

(56) References cited:
**EP-A1- 2 808 533** WO-A1-2014/174906
**DE-A1-102018 215 681** US-A1- 2019 048 838
**US-A1- 2019 345 907**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to fuel delivery in internal combustion engines and in particular to a fuel injector.

BACKGROUND ART

Fuel injectors are used in combustion engines to inject fuel e.g. into a runner of an air intake manifold ahead of a cylinder intake valve or directly into the combustion chamber of an engine cylinder. According to one known design, a pintle is disposed within an injector housing and is movable between a closed position, in which it (or a ball that is fixed to the pintle) closes a nozzle at one end of the injector housing, and an open position, in which it is moved away from the nozzle, thereby enabling fuel injection. The nozzle has at least one, often a plurality of injector holes or spray holes that traverse the wall of the injector housing. During operation, liquid fuel is injected through these spray holes so that each spray hole generates a spray plume (also referred to as jet plume or jet) consisting of dispersed droplets.

Documents DE 10 2018 215681 A1 and WO 2014/174906 A1 show examples of fuel injectors having discharge orifices with an at least partially elliptical cross-section.

There are two general configurations for mounting a fuel injector to the head of a gasoline direct injection (GDI) engine. In central mounting configuration, the injector is mounted in a center region of the engine cylinder head among the intake and exhaust valves and close to the spark plug. In side mounting configuration, the injector is mounted on the side of cylinder head where the intake valves are located.

The spray layout - i.e. the jet orientation, the mass percentage for each individual jet as well as the penetration and dispersion angle of each jet plume - needs to be optimized for each individual engine in order to achieve good fuel-gas mixing for optimum engine combustion and emission performance. In this context, the principle requirement is to deliver the fuel to the right location in the combustion chamber in the right time. For a GDI engine based on homogeneous combustion, the main requirements are to obtain a good homogeneous mixture preparation before ignition and to minimize liquid fuel impingement on the combustion chamber wall. The latter effect is the major source of engine soot emission.

A given spray layout can be characterized by the spray pattern, which is measured on a horizontal plane (also referred as the patternation plane) located at a given distance from a vertically mounted injector, and by spray visualization for the jet penetration. A fuel injector nozzle needs to be designed in order to produce the given spray layout. The design parameters include the number of spray holes, the orientation of each spray hole axis, the corresponding hole cross-section area and the hole shape. Most commonly, spray holes take tapered circular cone shapes, either convergent or divergent. For a given spray-hole axis orientation, the mass flow of each spray hole depends on the hole diameter, taper and length. The spray penetration is influenced by the hole length, taper angle and the counter bore diameter.

There is a general requirement for low spray penetration for downsized engines to minimize the fuel impingement on walls. For a central mounting injector, the spray-hole axis orientation is nearly symmetric to the injector axis. The design parameters for the individual spray hole are usually similar to each other. Special care is required for a side mounting injector considering the big differences in the axis orientation of the individual spray holes. A side mounting injector usually has a triangular spray pattern in the patternation plane, in some cases also a trapezoid or polygon pattern. The injector axis intersects the patternation plane at the origin of an x-axis and a y-axis. In the mounted state on the engine, where the injector axis (Z) is disposed at an angle with respect to the axis of the cylinder, the y-axis of the patternation plane corresponds to the horizontal direction while the positive side of the x-axis is sloping downwards and the negative side is sloping upwards. All jet plumes generated by the injector are projected to the positive side, except for 1 or 2 jets, which can be targeted slightly above the injector axis. In the present text, we refer to those spray plumes from spray holes, whose axis is above or close to the injector axis in a side mounting engine as 'upper plumes'. They have the shortest traveling distance to the cylinder wall. Wall impingement arises in particular for those spray plumes whose projections on the patternation plane are close to the y-axis, i.e. the spray plumes originating from the spray holes that are least inclined with respect injector axis. These spray plumes, which can be referred to as the upper plumes, have the shortest traveling distances to the cylinder wall.

It is most difficult to avoid liner wetting for these upper plumes under high/full load at low engine speed, when the tumble motion is relatively weak, and under cold-start conditions, when the evaporation is suppressed. Under high/full load, there is a demand for high injection quantity which can cause the upper plumes to penetrate the combustion chamber and impinge on the cylinder liner. Therefore, reducing liner wetting is the major challenge for these operations, while mixture homogenization is usually good at low engine speed. Possible solutions include lower targeting of the upper plume(s) as well as reducing their mass flow rate.

On the other hand, under high/full load at high engine speed, a strong tumble motion pushes the jet plumes downwards in the cylinder and could prevent the plumes from penetrating the combustion chamber. Also, mixture homogenization becomes a big challenge. These problems, in turn, could be avoided by measures contrary to the ones for low engine speed. In this case, higher targeting for the upper plumes and increasing their mass flow rate properly are beneficial for reducing the engine particulate emission.

Therefore, under high/full load conditions, high engine speed operation on the one hand and low engine speed operation on the other hand impose contradictory requirements on the spray definition for the upper plumes in the combustion chamber in a side mounting engine. While low engine speed requires lower plume targeting and reducing the mass flow rate, high engine speed requires higher targeting and increasing the mass flow rate.

TECHNICAL PROBLEM

It is thus an object of the present invention to improve the performance of an engine with side mounting injector design at various engine speeds under high load conditions.

This problem is solved by a fuel injector according to claim 1.

GENERAL DESCRIPTION OF THE INVENTION

The invention provides a fuel injector. This is a fuel injector for a combustion engine, like, e.g., a gasoline engine or a diesel engine. The fuel injector is adapted for side mounting in an engine so that an injector axis is inclined with respect to a cylinder axis, which defines a vertical direction, and with respect to a horizontal plane. "Side mounting" means that the injector, in its mounted state, is positioned on one side of the cylinder head, more particularly on the side where the inlet valve of each cylinder is disposed. Each cylinder of the engine defines a cylinder axis, which is normally a symmetry axis and a center axis of the cylinder. In this context, the cylinder axis defines a vertical direction, while it should be recognized that, depending on the type of engine, this may or may not be the vertical direction as defined by gravity. With respect to this vertical direction, one can define a horizontal plane which is orthogonal to the cylinder axis. When installed in the engine, an injector axis of the fuel injector is inclined with respect to the cylinder axis as well as with respect to the horizontal plane, i.e. it is at an oblique angle with respect to the cylinder axis. The injector axis corresponds to the axis along which a pintle is movable inside the injector. As is known in the art, the pintle is movable between an open position and a closed position. In the closed position, the pintle itself or a ball connected to the pintle engages the inside of a nozzle seat and closes the injector so that fuel is retained in the injector. When the pintle is moved into the open position, the nozzle is opened and fuel is injected into the cylinder.

The fuel injector comprises a nozzle housing with a plurality of spray holes, each spray hole extending along a spray-hole axis from an inlet inside of the nozzle housing to an outlet and opening into a counterbore. The nozzle housing is a part or a portion of a housing of the injector, wherein one main function of the housing is to contain and guide fuel before it is ejected from the injector. Therefore, an inner cavity is normally disposed inside the housing that extends at least mostly along the injector axis. Usually, the housing comprises a plurality of pieces or components that are fixedly connected with each other, one of which pieces can be the nozzle housing. More generally, the term "nozzle housing" refers to a housing on which a nozzle for ejecting the fuel is disposed. More specifically, the nozzle housing comprises a plurality of spray holes, which traverse the wall of the nozzle housing. During operation of the injector, fuel is injected through these spray holes from the injector to the outside.

Each spray hole extends along a spray-hole axis, which normally is a symmetry axis of the respective spray hole. It should be noted that the spray hole axes of different spray holes are not identical and normally are not even parallel to each other. The spray-hole axis corresponds to a general direction of motion from the inside to the outside, although the precise motion of the fuel is much more complicated. Each spray hole comprises an inlet at the inside of the nozzle housing. Through the inlet, the spray hole may be connected e.g. to the above-mentioned inner cavity. Opposite the inlet, the spray hole ends in an outlet. At this outlet, the spray hole opens into a counterbore. One could also say that the spray hole is connected to the counterbore through the outlet. The counterbore is disposed at the outer end of the spray hole and could alternatively also be regarded as part of the spray hole, or the spray hole and the counterbore can be regarded as portions of an ejector duct through which fuel is ejected. As a rule, the cross-section of the counterbore is larger than the cross-section of the spray hole at the outlet, i.e. the cross-section available for the fuel as it is ejected from the injector increases when it passes from the spray hole through the outlet into the counterbore. It should be appreciated that the term "counterbore" is not to be construed in a limiting way as to the manufacturing method, i.e. that the counterbore has to be mechanically bored from the outside of the nozzle housing.

The spray holes comprise at least one upper spray hole and at least one lower spray hole, the spray-hole axis of every upper spray hole being less inclined against the horizontal plane than the spray-hole axis of every lower spray hole. In other words, the spray-hole axes of different spray holes have different inclinations with respect to the horizontal plane. Therefore, one can distinguish spray holes with a smaller inclination and spray holes with a larger inclination. These spray holes are referred to as upper spray holes and lower spray holes, respectively. If the end of the cylinder where the injector is disposed is regarded as the upper end of the cylinder, one could say that the spray hole axis/axes of lower spray hole(s) is/are inclined further downwards than the spray hole axis/axes of the upper spray hole(s). Accordingly, if one considers a travelling direction corresponding to the spray hole axis, the travelling distance to cylinder wall is normally shorter for the upper spray holes. There is at least one upper spray hole and at least one lower spray hole, but mostly there are a plurality of spray holes in each group. Although the terms "upper/lower spray hole" are defined here with reference to the direction of the respective spray-hole axis, the upper spray holes are also normally disposed higher than the lower spray holes. More specifically, the inlet of every upper spray hole may be disposed higher than the inlet of every lower spray hole and/or the outlet of every upper spray hole may be disposed higher than the outlet of every lower spray hole.

According to the invention, at least one upper spray hole has tangential configuration, with an elliptical cross-section at the inlet with an aspect ratio of at least 1.1 and a circular cross-section at the outlet with a roundness deviation of less than 5%, a small half-axis of the elliptical cross-section being inclined by less than 20° with respect to a radial plane, which radial plane includes the injector axis and a center of the cross-section. The cross-section of at least one upper spray hole at the inlet is elliptical, i.e. it has the shape of an ellipse. Any ellipse can be characterised by a small half-axis and a large half-axis, which are orthogonal with respect to each other. The ratio between the large half-axis and the small half-axis is known as the aspect ratio of the ellipse. In this case, the aspect ratio is at least 1.1, i.e. the large half-axis of the ellipse is at least 1.1 times larger than the small half-axis. Furthermore, the cross-section at the outlet of the respective upper spray hole is circular and has a roundness deviation of less than 5%. In this context, this means that the cross-section at the outlet either corresponds to a perfect circle with a roundness deviation of zero or that it has a shape that is very similar to a perfect circle. In such a case, it is possible to define two concentric circles, an inner circle which touches the boundary of the cross-section from the inside and an outer circle which touches the boundary of the cross-section from the outside. One could also say that these circles define an "inner radius" and an "outer radius". If the roundness deviation is less than 5%, the following condition holds for inner radius $r_i$ and the outer radius $r_o$:

$$\frac{r_o - r_i}{r_i} < 0.05$$

As indicated above, the roundness deviation can be even closer to zero, e.g. less than 2% or less than 1%. Normally, the cross-section at the outlet is a perfect circle within the limits of the manufacturing process. Each (elliptical or circular) cross-section is measured perpendicular to the spray-hole axis. In other words, when the spray-hole axis is not perpendicular to the wall of the nozzle housing or the bottom wall of the counterbore, respectively, the shape of the inlet or outlet as such could differ from the shape of the cross-section. Mostly, however, the spray-hole axis is more or less perpendicular to the wall of the nozzle housing and to the bottom wall of the counterbore, so that these differences can be neglected. Either way, the cross-section of the respective spray hole is not constant but it changes from an elliptical shape at the inlet to a circular shape at the outlet. The orientation of the elliptical cross-section is such that the small half-axis is inclined by less than 20° with respect to a radial plane. The radial plane includes the injector axis and a center of the cross-section. One could also say that the injector axis and the center of the cross-section span the radial plane. In this context, the center of the elliptical cross-section is also the point from which the small half-axis and the large half-axis are measured. As viewed parallel to the injector axis, the radial plane appears as a straight, radial line from the injector axis to the center of the elliptical cross-section. Roughly speaking, the elliptical cross-section is stretched more or less in a tangential direction, if the axial direction is defined by the injector axis. Due to this tangentially stretched shape, the configuration is referred to as a "tangential configuration".

It has been found that the tangential configuration, i.e. the combination of an elliptical cross-section at the inlet, a circular cross-section at the outlet and a counterbore leads to an advantageous injection performance of the upper spray hole(s). In particular, this design allows a high mass flow rate in combination with low spray penetration for the plumes generated by the upper spray hole(s). The high mass flow rate for those plumes can help to improve the fuel-gas mixing under high engine speed, while the low penetration can avoid the wetting of the cylinder wall at low engine speed, which is especially a problem for the upper spray hole(s). Thus, with the inventive fuel injector, the seemingly contrary demands for low engine speed and high engine speed can be met at the same time. While the invention is not limited to this explanation, it seems that compared to a spray hole with a circular cross-section at both the inlet and the outlet, the inventive spray-hole design leads to an increase of the kinetic energy of secondary flow (NAKE) and to a decrease of the axial kinetic energy (AKE) of the plume after exiting the counterbore and travelling into the cylinder, wherein "axial" refers to the direction of the spray-hole axis. Simulations indicate that the high NAKE (which is good for a low penetration) is probably induced by a vortex flow enhancement linked to the elliptical cross-section at the inlet.

It is highly preferred that at least one spray hole opens into a counterbore having a circular cross-section with a roundness deviation of less than 5%. More preferably, this applies to every spray hole, i.e. every upper spray hole and every lower spray hole. As explained above with reference to the circular cross-section at the outlet of the spray hole, the cross-section of the counterbore is normally a perfect circle within the limits of the manufacturing process, but slight deviations from the circle shape have a minor or negligible impact. Normally, the cross-section of the counterbore is constant along its entire length, i.e. the counterbore is normally cylindrical. However, the cross-section could also decrease or increase along the length of the counterbore, corresponding to a truncated cone shape.

In some embodiments, only one spray hole (e.g. an upper spray hole or an uppermost spray hole as mentioned below) may have an elliptical cross-section. In other embodiments, a plurality of spray holes, in particular a plurality of upper spray holes, comprise an elliptical cross-section at the inlet. More specifically, a plurality of spray holes may have a tangential configuration.

Usually, a radial and tangential alignment, respectively, of the small half-axis and the large half-axis is favorable. It is thus preferred that for at least one upper spray hole with a tangential configuration, the small half-axis of the elliptical cross-section is inclined by less than 15°, preferably less than 10°, more preferably less than 5°, against the radial plane. It is understood that the small half-axis can even be exactly aligned with the radial plane. This may particular be true for all spray holes with the first configuration, e.g. all upper spray holes, although different alignments for different upper spray holes are possible and may be beneficial.

While an aspect ratio of at least 1.1 is sufficient to realise at least some of the advantages of the present invention, it has been found that a near-circular shape as well as a highly elliptical shape of the elliptical cross-section are usually less advantageous. Rather, it is beneficial if the aspect ratio of at least one elliptical cross-section is between 1.3 and 2.0, preferably between 1.5 and 1.8.

Generally, the number of spray holes is not limited within the scope of the invention. However, according to a typical embodiment, the nozzle housing comprises between three and six spray holes. The spray holes may be arranged according to a triangular pattern, a polygonal pattern or any other pattern. In particular, for side mounting, the nozzle housing may comprise five spray holes, with three upper spray holes and two lower spray holes.

According to a typical embodiment of an injector for side mounting, the spray-hole axis of an uppermost spray hole, which is least inclined with respect to the horizontal plane, is inclined against the injector axis by less than 10°. The uppermost spray hole is the spray hole whose spray-hole axis has the least inclination with respect to the horizontal plane. In this embodiment, the spray-hole axis of this uppermost spray hole is almost (or even exactly) parallel to the injector axis. The angle between this spray hole axis and the injector axis may even be less than 5°. Normally, at least this uppermost spray hole as an elliptical cross-section at the inlet as described above. In embodiments, upper jets can be slightly higher than the injector axis.

While an elliptical shape of the cross-section has a beneficial effect for the upper spray holes in that it reduces the risk of wetting the cylinder wall while still enabling a high mass flow rate, it can also be used to improve the plume formation at the lower spray holes. With the lower spray holes, there is normally no increased risk of wetting the cylinder wall opposite the injector. However, at high engine speed, the increased airflow can push the plumes of the lower spray holes to the side, which also bears the risk of wetting e.g. the cylinder wall on the side of the injector or the cylinder walls that are disposed laterally with respect to the orientation of the injector. To avoid these issues, it is preferred that at least one lower spray hole has a radial configuration, with an elliptical cross-section at the inlet with an aspect ratio of at least 1.1 and a circular cross-section at the outlet with a roundness deviation of less than 5%, a large half-axis of the elliptical cross-section being inclined by less than 20° with respect to a radial plane defined by the injector axis and a center of the cross-section. In other words, the respective lower spray hole generally has the same geometry as described above for the at least one upper spray hole, but the orientation of the large half-axis and the small half-axis is different. For this lower spray hole, the large half-axis is oriented almost or exactly parallel to the radial plane, wherefore this configuration is referred to as a "radial configuration". The preferred aspect ratios mentioned above also apply to the elliptical cross-section of the lower spray hole as well as the preferred angles of inclination with respect to the radial plane. It has been found that this "radial alignment" of the ellipse can bring more resistance to a side push by the airflow and reduce the risk of wetting the cylinder wall.

Depending on e.g. the design of the engine and the arrangement of the spray holes, it can be preferred that a plurality of lower spray holes have a radial configuration. The aspect ratios and the inclinations of the large half-axis may be the same for all lower spray holes or it may be different for different lower spray holes. As an alternative to this embodiment, only a single lower spray hole may have a radial configuration.

Alternatively or additionally to the above-mentioned embodiments, at least one spray hole, in particular at least one lower spray hole, can have a circular cross-section at the outlet with a roundness deviation of less than 5%. This may apply to every lower spray hole or some lower spray holes may have a circular cross-section while others have an elliptical cross-section at the inlet. As explained above with reference to the circular cross-section at the outlet of the spray hole, the cross-section at the inlet is normally a perfect circle within the limits of the manufacturing process.

According to a preferred embodiment, for at least one spray hole, the cross-section at the inlet is larger than the cross-section at the outlet. In particular, this may apply to every spray hole or at least to every spray hole with an elliptical cross-section at the inlet. One could also say that the respective spray hole generally tapers from the inlet to the outlet. It is believed that this tapering is highly advantageous for an increase of the non-axial kinetic energy (NAKE) and to a decrease of the axial kinetic energy (AKE) of the plume as described above.

Preferably, the cross-section of at least one spray hole decreases continuously from the inlet to the outlet. For example, the cross-section may decrease linearly or quadratically. At the transition from the spray hole to the counterbore, however, the cross-section usually increases non-continuously or abruptly.

Even if the cross-section (or strictly speaking, the area of the cross-section) decreases from the inlet to the outlet, there are various possibilities for the dimensions of the small half-axis and the large half-axis at the inlet in relation to the radius at the outlet (although the large half-axis has to be larger than the radius). According to one embodiment, the small half-axis at the inlet is between 90% and 120% of the radius at the outlet. More specifically, it may be between 95% and 105% or even be equal to the radius at the outlet. If the cross-section at the outlet has a nonzero roundness deviation, "radius" refers to the inner radius.

It should be understood that the length of the spray hole in relation to the dimensions of its cross-section also has some influence on the effectiveness of the above-mentioned effects on plume stability. Normally, a length of at least one spray hole is between 4 times and 10 times the radius at the outlet. This may particularly apply to every (upper and lower) spray hole.

At the transition from the spray hole to the counterbore, the cross-section increases, normally in a significant way. According to a preferred embodiment, a cross-section of the counterbore is between 4 times and 8 times the cross-section at the outlet. The size and shape of all counterbores can be at least approximately the same. Alternatively, different counterbores could have different sizes and/or shapes.

According to another aspect, the invention concerns an internal combustion engine comprising at least one cylinder defining a combustion chamber, the cylinder having a cylinder axis, a fuel injector as disclosed herein being side mounted relative to said cylinder such the injector axis is inclined relative to the cylinder axis and with respect to a plane perpendicular to the cylinder axis.

BRIEF DESCRIPTION OF THE DRAWINGS

Preferred embodiments of the invention will now be described, by way of example, with reference to the accompanying drawings, in which:

Fig. 1    is a cross-sectional view of a part of an engine with a fuel injector;

Fig. 2    is a cross-sectional view corresponding to fig. 1 showing a distribution of jet plumes;

Fig. 3    is an outside view of a nozzle housing of an inventive fuel injector along an injector axis;

Fig. 4    is a principle detail view, in perspective, of the fuel injector from fig.3;

Fig. 5    is an inside view of a nozzle housing along an injector axis according to a first embodiment; and

Fig. 6    is an inside view of a nozzle housing along an injector axis according to a second embodiment.

DESCRIPTION OF PREFERRED EMBODIMENTS

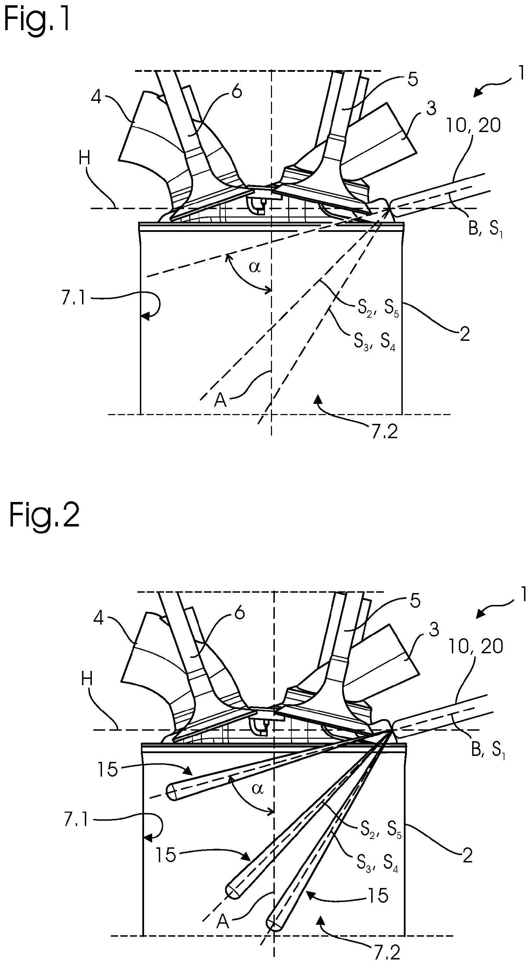

Fig.1 schematically shows a cross-sectional view of a part of an engine 1, e.g. a gasoline engine for a passenger car. The engine 1 comprises a cylinder 2 with a cylinder axis A, which defines a vertical direction in this context, although this vertical direction may not coincide with the direction of gravity, depending on the design of the engine 1. A horizontal plane H is perpendicular to the cylinder axis A. And intake duct 3 and an outlet duct 4 are connected to the cylinder 2 with an intake valve 5 and an outlet valve 6 disposed to alternatingly open and close the respective ducts 3, 4.

On the side of the cylinder 2 where the intake valve 5 is disposed, an injector 10 is installed, which is only shown in a very simplified manner. The injector 10 has an injector axis B, which in this case is tilted at an angle $\alpha$ of about 70° with respect to the cylinder axis A and about 20° with respect to the horizontal plane H. The injector axis B corresponds to the direction of motion of a pintle 11 that is movably disposed inside a nozzle housing 20. The nozzle housing 20 has an inner cavity 20.2 in which the pintle 11 is disposed and through which pressurized fuel is guided during operation of the engine 1.

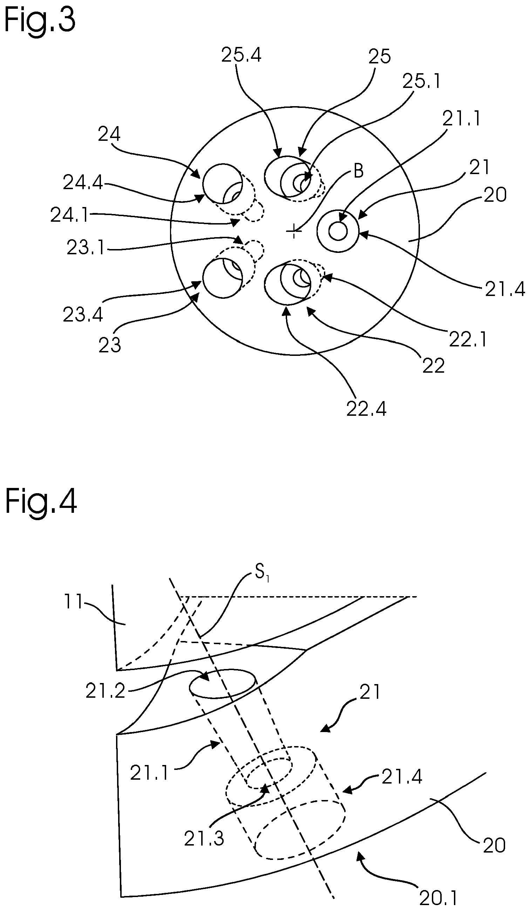

In order to eject fuel from the inner cavity 20.2 to the outside and directly into the cylinder 2, the nozzle housing 20 comprises a plurality of ejector ducts 21 - 25, the structure of which can be seen in fig. 3 and fig. 4. Each ejector duct 21 - 25 comprises a spray hole 21.1 - 25.1 that opens into a counterbore 21.4. Each spray hole 21.1 - 25.1 defines a spray-whole axis $S_1$ - $S_5$, which are shown in fig. 1. Fig. 2 illustrates schematically the direction of spray plumes 15 generated by the respective ejector duct 21 - 25 during operation of the injector 10. In order to achieve an optimum efficiency of the engine 1, a sufficient mixing of the air entering the cylinder 2 through the intake duct 3 and the fuel represented by the plumes 15 has to be achieved, while at the same time avoiding any (significant) wetting of any wall sections 7.1, 7.2 of the cylinder wall. In particular, there is a potential risk of the plume 15 moving along in the direction of a first spray hole axis $S_1$, which is more or less parallel to the injector axis B, hitting a wall section 7.1 opposite the injector 10. This is especially true under high load conditions at low engine speed. On the other hand, under high load conditions and at high engine speed, there is a high risk that this plume 15 is pushed downwards by the air flowing in through the intake duct 3, so that no sufficient distribution of fuel inside the cylinder 2 can be achieved.

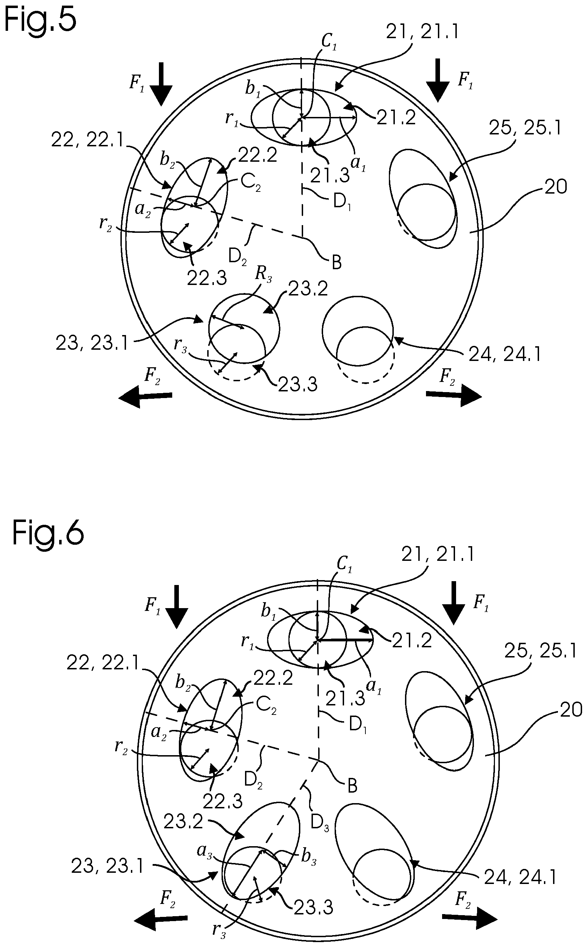

These problems are overcome by the geometry of the spray hole 21.1 of this ejector duct 21, which can be seen in figs. 3 to 5. The first spray hole 21.1 can also be referred to as an uppermost spray hole, since its spray-hole axis $S_1$ has the least inclination with respect to the horizontal plane H and it is disposed, in use, higher than the other spray holes 22.1 - 25.1. As can be seen in figs. 4 and 5, the first spray hole 21.1 extends along the first spray hole axis $S_1$ from a first inlet 21.2 to a first outlet 21.3, where the first spray hole 21.1 opens into a first counterbore 21.4. In figs. 5 and 6, the counterbores are omitted for sake of simplicity. At the first inlet 21.2, the cross-section of the first spray hole 21.1 is elliptical, while it is circular at the first outlet 21.3. The elliptical cross-section has a large half-axis $a_1$ and a small half-axis $b_1$ with an aspect ratio of 1.5. The small half-axis $b_1$ is equal to the radius $r_1$ at the first outlet 21.3. The counterbore 21.4 has a circular cross-section with a constant radius which is about 2.5 times the radius $r_1$ at the first outlet 21.3. Since the small half-axis $b_1$ is equal to the radius $r_1$ and the large half-axis $a_1$ is 1.5 times larger than the small half-axis $b_1$, the cross-section at the inlet 21.2 is larger than the cross-section of the outlet 21.3 (namely 1.5 times larger). In this case, the cross-section decreases continuously and in a linear way from the inlet 21.2 to the outlet 21.3. As can be seen in fig. 5, the small half-axis $b_1$ is parallel to a first radial plane $D_1$ that runs through the injector axis and a centre $C_1$ of the cross-section of the inlet 21.1. One could also say that the elliptical cross-section is oriented in a tangential direction, if the axial direction is given by the injector axis B. Therefore, the configuration of the first spray hole 21.1 is referred to as a tangential configuration.

The second ejector duct 22 is designed in a similar way, i.e. its spray hole 22.1 also comprises an elliptical cross-section at the inlet 22.2 and a circular cross-section at the outlet 22.3. The aspect ratio of a large half-axis $a_2$ and a small axis $b_2$ is identical to the first spray hole 21.1 and the small half-axis $b_2$ is also parallel to a radial plane $D_2$ that runs through the injector axis B and the centre $C_2$ of the elliptical cross-section. A cross-section may be generally defined as an intersection area of a plane normal to the spray hole axis with the spray hole geometry.

The first and second spray holes 21.1, 22.1 as well as a fifth spray hole 25.1 can be considered as upper spray holes, in contrast to a third 23.1 and fourth spray hole 24.1, which are considered as lower spray holes. On the one hand, the upper spray holes 21.1, 22.1, 25.1 are disposed higher than the lower spray holes 23.1, 24.1, on the other hand the injector axis $S_1$, $S_2$, $S_5$ of every upper spray hole 21.1, 22.1, 25.1 is less inclined with respect to the horizontal plane H than the injector axis $S_3$, $S_4$ of every lower spray hole 23.1, 24.1. During operation, the plumes 15 originating from the upper spray holes 21.1, 22.1, 25.1 can be diverted by the airflow from the intake duct 3 more or less according to a first force $F_1$ as indicated in fig. 5 and fig. 6. It is understood that the influence of the airflow is much more complicated and the depiction in the drawings is extremely simplified. Anyhow, it has been found that the design of the upper spray holes 21.1, 22.1, 25.1 depicted here helps to stabilize the plumes 15 so that they are diverted to a smaller degree. At the same time, the design of the upper spray holes 21.1, 22.1, 25.1 with the elliptical cross-section that transitions into a circular cross-section, combined with the respective counterbore, leads to an increase of the non-axial kinetic energy (NAKE) and to a decrease of the axial kinetic energy (AKE) in the respective plume 15, which reduces the risk of wetting, while still promoting the formation and distribution of a fuel-air mixture.

In the embodiment of fig. 5, the lower spray holes 23.1, 24.1 each have a circular cross-section at the inlet 23.2, 24.2 as well as at the outlet 23.3, 24.3. For example, the third spray hole 23.1 has a radius $r_3$ at the outlet 23.3 that is equal to the radius $r_1$, $r_2$ of at the outlet 21.3, 22.3.of the first and second spray hole 21.1, 22.1, while the radius $R_3$ at the inlet 23.2 is larger. For instance, the radius $R_3$ at the inlet 23.2 could be selected so that the cross-section is more or less equal to the above-mentioned elliptical cross-section. In this embodiment, each spray hole 22.1 - 25.1 has a length approximately 5 times larger than the radius at the outlet 22.3 - 25.3.

The plumes 15 originating from the third and fourth spray hole 23.1, 24.1 are not affected by the airflow as indicated by the first force $F_1$, but they could (normally to a lesser degree) be diverted by a laterally directed second force $F_2$, thereby risking wetting of wall sections 7.2 that are laterally disposed with respect to the general direction of the injector axis B. This problem can be alleviated by the design of the second embodiment shown in fig. 6. The design is largely identical to the first embodiment shown in fig. 5 and will insofar not be explained again. However, the third and fourth spray hole 23.1, 24.1 each have an elliptical cross-section at the inlet 23.2, 24.2, which will be described with respect to the third spray hole 23.1. The elliptical cross-section has an aspect ratio of 1.5 between a large half-axis as and a small half-axis $b_3$. As can be seen in fig. 6, the large half-axis as is parallel to a radial plane $D_3$ that runs through the injector axis B and a centre $C_3$ of the cross-section of the inlet 23.2. One could also say that this elliptical cross-section is radially oriented and that the respective spray holes 23.1, 24.1 have a tangential configuration. It has been found that the design of the lower spray holes 23.1, 24.1 with the elliptical cross-section that transitions into a circular cross-section, combined with the respective counterbore, not only leads to an increase of the non-axial kinetic energy (NAKE) and to a decrease of the axial kinetic energy (AKE) in the respective plume 15, but also makes the plumes 15 less sensitive to the influence of second force $F_2$ induced by the airflow. This reduces the risk of wetting, while still promoting the formation and distribution of a fuel-air mixture.

Legend of Reference Numbers:

| | |
|---|---|
| 1 | engine |
| 2 | cylinder |
| 3 | intake duct |
| 4 | outlet duct |
| 5 | intake valve |

| 6 | outlet valve |
|---|---|
| 7.1, 7.2 | wall section |
| 10 | injector |
| 11 | pintle |
| 20 | nozzle housing |
| 20.1 | end portion |
| 20.2 | inner cavity |
| 21-25 | ejector duct |
| 21 .1-25.1 | spray hole |
| 21.2-25.2 | inlet |
| 21.3-25.3 | outlet |
| 21.4-25.4 | counterbore |
| A | cylinder axis |
| $a_1$-$a_3$ | large half-axis |
| B | injector axis |
| $b_1$-$b_3$ | small half-axis |
| $C_1$ -$C_3$ | center |
| $D_1$ -$D_3$ | radial plane |
| $F_1, F_2$ | force |
| $r_1$ -$r_3$, $R_3$ | radius |
| $S_1$ -$S_5$ | spray-hole axis |
| $\alpha$ | angle |

**Claims**

1. A fuel injector (10) for side mounting in an engine (1) so that an injector axis (B) is inclined with respect to a cylinder axis (A), which defines a vertical direction, and with respect to a horizontal plane (H),

    - the fuel injector (10) comprising a nozzle housing (20) with a plurality of spray holes (21.1-25.1), each spray hole (21.1-25.1) extending along a spray-hole axis ($S_1$-$S_5$) from an inlet (21.2-25.2) inside the nozzle housing (20) to an outlet (21.3-25.3) and opening into a counterbore (21.4-25.4), the spray hole (21.1-25.1) being connected to the counterbore (21.4-25.4) through the outlet (21.3-25.3),
    - the spray holes (21.1-25.1) comprising at least one upper spray hole (21.1, 22.1, 25.1) and at least one lower spray hole (23.1, 24.1), the spray-hole axis of every upper spray hole (21.1, 22.1, 25.1) being less inclined against the horizontal plane (H) than the spray-hole axis of every lower spray hole (23.1, 24.1), and
    - at least one upper spray hole (21.1, 22.1, 25.1) having a tangential configuration, with an elliptical cross-section at the inlet (21.2, 22.2, 25.2) with an aspect ratio of at least 1.1 and a circular cross-section at the outlet (21.3, 22.3, 25.3) with a roundness deviation of less than 5%, a small half-axis ($b_1$, $b_2$) of the elliptical cross-section being inclined by less than 20° with respect to a radial plane ($D_1$, $D_2$), which radial plane ($D_1$, $D_2$) includes the injector axis (B) and a center ($C_1$, $C_2$) of the cross-section.

2. The fuel injector according to any of the preceding claims, wherein at least one spray hole (21.1-25.1) opens into a counterbore (21.4-25.4) having a circular cross-section with a roundness deviation of less than 5%.

3. The fuel injector according to any of the preceding claims, wherein a plurality of upper spray holes (21.1, 22.1, 25.1) comprise an elliptical cross-section at the inlet (21.2, 22.2, 25.2).

4. The fuel injector according to any of the preceding claims, wherein for at least one upper spray hole (21.1, 22.1, 25.1) having a tangential configuration, the small half-axis ($b_1$, $b_2$) of the elliptical cross-section is inclined by less than 15°, preferably less than 10°, more preferably less than 5°, against the radial plane ($D_1$, D2).

5. The fuel injector according to any of the preceding claims, wherein an aspect ratio of at least one elliptical cross-section is between 1.3 and 2.0, preferably between 1.5 and 1.8.

6. The fuel injector according to any of the preceding claims, wherein the nozzle housing (20) comprises between three and six spray holes (21.1-25.1).

7. The fuel injector according to any of the preceding claims, wherein the spray-hole axis ($S_1$) of an uppermost spray hole (21.1), which is least inclined with respect to the horizontal plane (H), is inclined against the injector axis (B) by less than 10°.

8. The fuel injector according to any of the preceding claims, wherein at least one lower spray hole (23.1, 24.1) has an elliptical cross-section at the inlet (23.2, 24.2) with an aspect ratio of at least 1.1 and a circular cross-section at the outlet (23.3, 24.3) with a roundness deviation of less than 5%, a large half-axis ($a_3$) of the elliptical cross-section being inclined by less than 20° with respect to a radial plane ($D_3$) defined by the injector axis (B) and a center ($C_3$) of the cross-section.

9. The fuel injector according to any of the preceding claims, wherein a plurality of lower spray holes (23.1, 24.1) comprise an elliptical cross-section at the inlet (23.2, 24.2).

10. The fuel injector according to any of the preceding claims, wherein at least one lower spray hole (23.1, 24.1) has a circular cross-section at the inlet (23.2, 24.2) with a roundness deviation of less than 5%.

11. The fuel injector according to any of the preceding claims, wherein for at least one spray hole (21.1 - 25.1), the cross-section at the inlet (21.2 - 25.2) is larger than the cross-section at the outlet (21.3 - 25.3).

12. The fuel injector according to any of the preceding claims, wherein

the cross-section of at least one spray hole (21.1 - 25.1) decreases continuously from the inlet (21.2 - 25.2) to the outlet (21.3 - 25.3); and/or the small half-axis ($b_1$ - $b_3$) at the inlet (21.2 - 25.2) is between 90% and 120% of a radius ($r_1$ - $r_3$) at the outlet (21.3 - 25.3).

13. The fuel injector according to any of the preceding claims, wherein a length of at least one spray hole (21.1 - 25.1) is between 4 times and 10 times the radius ($r_1$ - $r_3$) at the outlet.

14. The fuel injector according to any of the preceding claims, wherein a cross-section of the counterbore (21.4 - 25.4) is between 4 times and 8 times of the cross-section at the outlet (21.3 - 25.3).

15. An internal combustion engine (1) comprising at least one cylinder (2) defining a combustion chamber, said cylinder (2) having a cylinder axis (A), a fuel injector (10) according to any one of the preceding claims being side mounted relative to said cylinder (2) such an injector axis (B) is inclined relative to the cylinder axis (A) and with respect to a horizontal plane (H) perpendicular to the cylinder axis (A).

**Patentansprüche**

1. Kraftstoffeinspritzdüse (10) zur Seitenmontage in einem Motor (1), so dass eine Einspritzdüsenachse (B) in Bezug auf eine Zylinderachse (A), die eine vertikale Richtung definiert, und in Bezug auf eine horizontale Ebene (H) geneigt ist,

- wobei die Kraftstoffeinspritzdüse (10) ein Düsengehäuse (20) mit einer Vielzahl von Sprühlöchern (21.1 - 25.1) umfasst, wobei sich jedes Sprühloch (21.1 - 25.1) entlang einer Sprühlochachse ($S_1$ - $S_5$) von einem Einlass (21.2 - 25.2) innerhalb des Düsengehäuses (20) zu einem Auslass (21.3 - 25.3) erstreckt und in einer Einsenkung (21.4 - 25.4) mündet, wobei das Sprühloch (21.1 - 25.1) durch den Auslass (21.3 - 25.3) mit der Einsenkung (21.4 - 25.4) verbunden ist,
- wobei die Sprühlöcher (21.1 - 25.1) mindestens ein oberes Sprühloch (21.1, 22.1, 25.1) und mindestens ein unteres Sprühloch (23.1, 24.1) umfassen, wobei die Sprühlochachse eines jeden oberen Sprühlochs (21.1, 22.1, 25.1) gegenüber der horizontalen Ebene (H) weniger geneigt ist als die Sprühlochachse eines jeden unteren Sprühlochs (23.1, 24.1) und
- mindestens ein oberes Sprühloch (21.1, 22.1, 25.1) eine tangentiale Konfiguration mit einem elliptischen Querschnitt an dem Einlass (21.2, 22.2, 25.2) mit einem Seitenverhältnis von mindestens 1,1 und einem kreisförmigen Querschnitt an dem Auslass (21.3, 22.3, 25.3) mit einer Abweichung von der Rundheit von weniger als 5 % aufweist, wobei eine kleine Halbachse ($b_1$, $b_2$) des elliptischen Querschnitts um weniger als 20° in Bezug auf eine radiale Ebene ($D_1$, $D_2$) geneigt ist, wobei die radiale Ebene ($D_1$, $D_2$) die Einspritzdüsenachse (B) und eine Mitte ($C_1$, $C_2$) des Querschnitts einschließt.

2. Kraftstoffeinspritzdüse nach Anspruch 1, wobei mindestens ein Sprühloch (21.1 - 25.1) in einer Einsenkung (21.4 - 25.4) mit einem kreisförmigen Querschnitt mit einer Abweichung von der Rundheit von weniger als 5 % mündet.

3. Kraftstoffeinspritzdüse nach einem der vorhergehenden Ansprüche, wobei eine Vielzahl von oberen Sprühlöchern (21.1, 22.1, 25.1) einen elliptischen Querschnitt an dem Einlass (21.2, 22.2, 25.2) umfasst.

4. Kraftstoffeinspritzdüse nach einem der vorhergehenden Ansprüche, wobei bei mindestens einem oberen Sprühloch (21.1, 22.2, 25.1) mit einer tangentialen Konfiguration die kleine Halbachse ($b_1$, $b_2$) des elliptischen Querschnitts um weniger als 15°, vorzugsweise weniger als 10°, stärker bevorzugt weniger als 5° gegenüber der radialen Ebene ($D_1$, $D_2$) geneigt ist.

5. Kraftstoffeinspritzdüse nach einem der vorhergehenden Ansprüche, wobei ein Seitenverhältnis von mindestens einem elliptischen Querschnitt zwischen 1,3 und 2,0, vorzugsweise zwischen 1,5 und 1,8 liegt.

6. Kraftstoffeinspritzdüse nach einem der vorhergehenden Ansprüche, wobei das Düsengehäuse (20) zwischen drei und sechs Sprühlöcher (21.1 - 25.1) umfasst.

7. Kraftstoffeinspritzdüse nach einem der vorhergehenden Ansprüche, wobei die Sprühlochachse ($S_1$) eines obersten Sprühlochs (21.1), die zumindest in Bezug auf die horizontale Ebene (H) geneigt ist, gegenüber der Einspritzdüsenachse (B) um weniger als 10° geneigt ist.

8. Kraftstoffeinspritzdüse nach einem der vorhergehenden Ansprüche, wobei mindestens ein unteres Sprühloch (23.1, 24.1) einen elliptischen Querschnitt an dem Einlass (23.2, 24.2) mit einem Seitenverhältnis von mindestens 1,1 und einem kreisförmigen Querschnitt an dem Auslass (23.3, 24.3) mit einer Abweichung von der Rundheit von weniger als 5 % aufweist, wobei eine große Halbachse ($a_3$) des elliptischen Querschnitts um weniger als 20° in Bezug auf eine radiale Ebene ($D_3$), die durch die Einspritzdüsenachse (B) und eine Mitte ($C_3$) des Querschnitts definiert ist, geneigt ist.

9. Kraftstoffeinspritzdüse nach einem der vorhergehenden Ansprüche, wobei eine Vielzahl von unteren Sprühlöchern (23.1, 24.1) einen elliptischen Querschnitt an dem Einlass (23.2, 24.2) umfasst.

10. Kraftstoffeinspritzdüse nach einem der vorhergehenden Ansprüche, wobei mindestens ein unteres Sprühloch (23.1, 24.1) einen kreisförmigen Querschnitt an dem Einlass (23.2, 24.2) mit einer Abweichung von der Rundheit von weniger als 5 % aufweist.

11. Kraftstoffeinspritzdüse nach einem der vorhergehenden Ansprüche, wobei bei mindestens einem Sprühloch (21.1 - 25.1) der Querschnitt an dem Einlass (21.2 - 25.2) größer als der Querschnitt an dem Auslass (21.3 - 25.3) ist.

12. Kraftstoffeinspritzdüse nach einem der vorhergehenden Ansprüche, wobei der Querschnitt von mindestens einem Sprühloch (21.1 - 25.1) kontinuierlich von dem Einlass (21.2 - 25.2) zu dem Auslass (21.3 - 25.3) abnimmt; und/oder die kleine Halbachse ($b_1$ - $b_3$) an dem Einlass (21.2 - 25.2) zwischen 90 % und 120 % eines Radius ($r_1$ - $r_3$) an dem Auslass (21.3 - 25.3) beträgt.

13. Kraftstoffeinspritzdüse nach einem der vorhergehenden Ansprüche, wobei eine Länge von mindestens einem Sprühloch (21.1 - 25.1) zwischen dem 4-fachen und dem 10-fachen des Radius ($r_1$ - $r_3$) an dem Auslass beträgt.

14. Kraftstoffeinspritzdüse nach einem der vorhergehenden Ansprüche, wobei ein Querschnitt der Einsenkung (21.4 - 25.4) zwischen dem 4-fachen und dem 8-fachen des Querschnitts an dem Auslass (21.3 - 25.3) beträgt.

15. Verbrennungsmotor (1), umfassend mindestens einen Zylinder (2), der eine Verbrennungskammer definiert, wobei der Zylinder (2) eine Zylinderachse (A) aufweist, wobei, wenn eine Kraftstoffeinspritzdüse (10) nach einem der vorhergehenden Ansprüche relativ zu dem Zylinder (2) seitenmontiert ist, eine solche Einspritzdüsenachse (B) relativ zu der Zylinderachse (A) und in Bezug auf eine horizontale Ebene (H) senkrecht zu der Zylinderachse (A) geneigt ist.

**Revendications**

1. Injecteur de carburant (10) pour montage latéral dans un moteur (1) de façon qu'un axe d'injecteur (B) soit incliné par rapport à un axe de cylindre (A), qui définit une direction verticale, et par rapport à un plan horizontal (H),

   - l'injecteur de carburant (10) comprenant un boîtier de buse (20) pourvu d'une pluralité d'orifices de pulvérisation (21.1-25.1), chaque orifice de pulvérisation (21.1-25.1) s'étendant le long d'un axe d'orifice de pulvérisation ($S_1$-$S_5$) d'une entrée (21.2-25.2) à l'intérieur du boîtier de buse (20) vers une sortie (21.3-25.3) et débouchant dans un contre-orifice (21.4-25.4), l'orifice de pulvérisation (21.1-25.1) étant relié au contre-orifice (21.4-25.4) par le biais de la sortie (21.3-25.3),
   - les orifices de pulvérisation (21.1-25.1) comprenant au moins un orifice de pulvérisation supérieur (21.1, 22.1, 25.1) et au moins un orifice de pulvérisation inférieur (23.1, 24.1), l'axe d'orifice de pulvérisation de chaque orifice de pulvérisation supérieur (21.1, 22.1, 25.1) étant moins incliné par rapport au plan horizontal (H) que l'axe d'orifice de pulvérisation de chaque orifice de pulvérisation inférieur (23.1, 24.1), et
   - au moins un orifice de pulvérisation supérieur (21.1, 22.1, 25.1) ayant une configuration tangentielle, avec une section transversale elliptique au niveau de l'entrée (21.2, 22.2, 25.2) qui présente un rapport d'élancement d'au moins 1,1, et une section transversale circulaire au niveau de la sortie (21.3, 22.3, 25.3) qui présente un écart de circularité inférieur à 5 %, un demi-petit axe ($b_1$, $b_2$) de la section transversale elliptique étant incliné de moins de 20° par rapport à un plan radial ($D_1$, $D_2$), lequel plan radial ($D_1$, $D_2$) inclut l'axe d'injecteur (B) et un centre ($C_1$, $C_2$) de la section transversale.

2. Injecteur de carburant selon la revendication 1, dans lequel au moins un orifice de pulvérisation (21.1-25.1) débouche dans un contre-orifice (21.4-25.4) ayant une section transversale circulaire qui présente un écart de déviation inférieur à 5 %.

3. Injecteur de carburant selon l'une quelconque des revendications précédentes, dans lequel une pluralité d'orifices de pulvérisation supérieurs (21.1, 22.1, 25.1) comprennent une section transversale elliptique au niveau de l'entrée (21.2, 22.2, 25.2).

4. Injecteur de carburant selon l'une quelconque des revendications précédentes, dans lequel, pour au moins un orifice de pulvérisation supérieur (21.1, 22.1, 25.1) ayant une configuration tangentielle, le

demi-petit axe ($b_1$, $b_2$) de la section transversale elliptique est incliné de moins de 15°, préférablement de moins de 10°, plus préférablement de moins de 5°, par rapport au plan radial ($D_1$, $D_2$).

5. Injecteur de carburant selon l'une quelconque des revendications précédentes, dans lequel un rapport d'élancement d'au moins une section transversale elliptique est compris entre 1,3 et 2,0, préférablement entre 1,5 et 1,8.

6. Injecteur de carburant selon l'une quelconque des revendications précédentes, dans lequel le boîtier de buse (20) comprend entre trois et six orifices de pulvérisation (21.1-25.1).

7. Injecteur de carburant selon l'une quelconque des revendications précédentes, dans lequel l'axe d'orifice de pulvérisation ($S_1$) d'un orifice de pulvérisation le plus haut (21.1), qui est le moins incliné par rapport au plan horizontal (H), est incliné par rapport à l'axe d'injecteur (B) de moins de 10°.

8. Injecteur de carburant selon l'une quelconque des revendications précédentes, dans lequel au moins un orifice de pulvérisation inférieur (23.1, 24.1) a une section transversale elliptique au niveau de l'entrée (23.2, 24.2) qui présente un rapport d'élancement d'au moins 1,1, et une section transversale circulaire au niveau de la sortie (23.3, 24.3) qui présente un écart de circularité inférieur à 5 %, un demi-grand axe ($a_3$) de la section transversale elliptique étant incliné de moins de 20° par rapport à un plan radial ($D_3$) défini par l'axe d'injecteur (B) et un centre ($C_3$) de la section transversale.

9. Injecteur de carburant selon l'une quelconque des revendications précédentes, dans lequel une pluralité d'orifices de pulvérisation inférieurs (23.1, 24.1) comprennent une section transversale elliptique au niveau de l'entrée (23.2, 24.2).

10. Injecteur de carburant selon l'une quelconque des revendications précédentes, dans lequel au moins un orifice de pulvérisation inférieur (23.1, 24.1) a une section transversale circulaire au niveau de l'entrée (23.2, 24.2) qui présente un écart de circularité inférieur à 5 %.

11. Injecteur de carburant selon l'une quelconque des revendications précédentes, dans lequel, pour au moins un orifice de pulvérisation (21.1-25.1), la section transversale au niveau de l'entrée (21.2-25.2) est supérieure à la section transversale au niveau de la sortie (21.3-25.3).

12. Injecteur de carburant selon l'une quelconque des revendications précédentes, dans lequel la section transversale d'au moins un orifice de pulvérisation (21.1-25.1) diminue progressivement de l'entrée (21.2-25.2) vers la sortie (21.3-25.3) ; et/ou le demi-petit axe ($b_1$-$b_3$) à l'entrée (21.2-25.2) est compris entre 90 % et 120 % d'un rayon ($r_1$-$r_3$) à la sortie (21.3-25.3).

13. Injecteur de carburant selon l'une quelconque des revendications précédentes, dans lequel une longueur d'au moins un orifice de pulvérisation (21.1-25.1) est comprise entre 4 fois et 10 fois le rayon ($r_1$-$r_3$) à la sortie.

14. Injecteur de carburant selon l'une quelconque des revendications précédentes, dans lequel une section-transversale du contre-orifice (21.4-25.4) est comprise entre 4 fois et 8 fois la section transversale à la sortie (21.3-25.3).

15. Moteur à combustion interne (1) comprenant au moins un cylindre (2) définissant une chambre de combustion, ledit cylindre (2) ayant un axe de cylindre (A), un injecteur de carburant (10) selon l'une quelconque des revendications précédentes étant monté latéralement par rapport audit cylindre (2) de façon qu'un axe d'injecteur (B) soit incliné par rapport à l'axe de cylindre (A) et par rapport à un plan horizontal (H) perpendiculaire à l'axe de cylindre (A).

# Fig.1

# Fig.2

Fig.3

Fig.4

# Fig.5

# Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018215681 A1
- WO 2014174906 A1